# EUROPEAN PATENT APPLICATION

(11) **EP 3 267 155 A1**
(43) Date of publication of application: **10.01.2018**
(21) Application number: 16196271.7
(22) Date of filing: 28.10.2016
(51) Int. Cl.: G01C 21/34

(54) **SYSTEM AND METHOD FOR RECOMMENDING AN OPTIMAL ROUTE**

(30) Priority: 08.03.2016 IN 201641027071
(71) Applicant: Wipro Limited, 560 035 Karnataka (IN)
(72) Inventor: VERMA, Manish, 560103 Bangalore (IN); JOSE, Tinku Malayil, 560068 Bangalore (IN)
(74) Representative: Finnegan Europe LLP

(57) **Abstract**

System and method for recommending an optimal route to a user are disclosed. In one embodiment, the method comprises receiving a potential travel request from the user. The method further comprises generating regional context data by analyzing the potential travel request and generating cost context data based on the regional context data. The cost context data comprises at least one potential route. The method further comprises correlating the potential travel request, the regional context data and the cost context data to obtain travel context data. The method further comprises determining the optimal route amongst the at least one potential route by applying one or more rules to a user profile and the travel context data and dynamically updating the optimal route based on at least one of presence of one or more passengers in a vehicle and High Occupancy Vehicle (HOV) lane data.

## Description

### Technical Field

This disclosure relates generally to a navigation device and more particularly to a system and a method for recommending an optimal route to a user.

### Background

These days navigation devices typically receive input from a user and recommend a route along with traffic information. Most of conventional navigation systems do not consider various factors, such as High Occupancy Vehicle lane availability, preferences of other passengers in a vehicle, and cost of travel. A high-occupancy vehicle lane (HOV lane) is a restricted traffic lane reserved at peak travel times or longer for the exclusive use of vehicles with a driver and one or more passengers, including carpools, vanpools, and transit buses. Further, typically a user is required to manually enter some of these factors or use information acquired manually from alternate sources. There are vehicle navigation systems that determine the number of vehicle occupants, and accordingly include or exclude HOV restricted sections of road in route calculations. However, the conventional navigation systems may not recommend an optimal route in case more than one passenger is travelling is vehicle as passenger preferences are not considered.

### SUMMARY

In one embodiment, a method for recommending an optimal route to a user is disclosed. The method comprises receiving a potential travel request from the user. The potential travel request comprises a start location, an end location, and a time of departure from the start location. The method further comprises generating regional context data by analyzing the potential travel request. The method further comprises generating cost context data based on the regional context data. The cost context data comprises at least one potential route from the start location to the end location. Each of the at least one potential route is associated with a travel time and a travel cost value. The method further comprises correlating the potential travel request, the regional context data and the cost context data to obtain travel context data. The method further comprises determining the optimal route amongst the at least one potential route by applying one or more rules to a user profile and the travel context data. The method further comprises dynamically updating the optimal route, to be recommended to the user, based on at least one of presence of one or more passengers in a vehicle and High Occupancy Vehicle (HOV) lane data.

In another embodiment, a system for recommending an optimal route to a user is disclosed. The system includes at least one processors and a computer-readable medium. The computer-readable medium stores instructions that, when executed by the at least one processor, cause the at least one processor to perform operations comprising receiving a potential travel request from the user. The potential travel request comprises a start location, an end location, and a time of departure from the start location. The operations further comprise generating regional context data by analyzing the potential travel request. The method further comprises generating cost context data based on the regional context data. The cost context data comprises at least one potential route from the start location to the end location. Each of the at least one potential route is associated with a travel time and a travel cost value. The operations further comprise correlating the potential travel request, the regional context data and the cost context data to obtain travel context data. The operations further comprise determining the optimal route amongst the at least one potential route by applying one or more rules to a user profile and the travel context data. The operations further comprise dynamically updating the optimal route, to be recommended to the user, based on at least one of presence of one or more passengers in a vehicle and High Occupancy Vehicle (HOV) lane data.

In another embodiment, a non-transitory computer-readable storage medium for recommending an optimal route to a user is disclosed, which when executed by a computing device, cause the computing device to perform operations comprising receiving a potential travel request from the user. The potential travel request comprises a start location, an end location, and a time of departure from the start location. The operations further comprise generating regional context data by analyzing the potential travel request. The method further comprises generating cost context data based on the regional context data. The cost context data comprises at least one potential route from the start location to the end location. Each of the at least one potential route is associated with a travel time and a travel cost value. The operations further comprise correlating the potential travel request, the regional context data and the cost context data to obtain travel context data. The operations further comprise determining the optimal route amongst the at least one potential route by applying one or more rules to a user profile and the travel context data. The operations further comprise dynamically updating the optimal route, to be recommended to the user, based on at least one of presence of one or more passengers in a vehicle and High Occupancy Vehicle (HOV) lane data.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
Figure 1 illustrates an exemplary network implementation comprising a navigation system, in accordance with some embodiments of the present disclosure.
Figure 2 illustrates an exemplary method for recommending an optimal route to a user, in accordance with some embodiments of the present disclosure.
Figure 3 is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

The present subject matter discloses systems and methods for recommending an optimal route to a user. In the present subject matter, the systems and methods leverage various Internet of Things (IoT) technologies, and information such as user preferences, user profile data and regional statistics data (Big Data), user social media data, and analytics data generated based on the user profile to arrive at a context which shall be used for arriving at optimal routing to destinations and also enable the external navigation devices to access this in arriving similar routing. Further, the present subject matter discloses use of additional sensors, such as occupancy counter, finger print reader, ECG reader, voice recognition, notification from various devices in a smart home, notification from user's social media feeds, and face recognition to identify number of passengers in a vehicle. Further, information, such as personal data like calendar, meeting invites, TO-DO list received from user devices are used to determine the destination and recommend an optimal route. The present subject matter also considers cost based analysis of routes which includes variable factors like Fuel consumption, Traffic prediction, Toll Gates, Occupancy, Current prevailing Gas price etc.

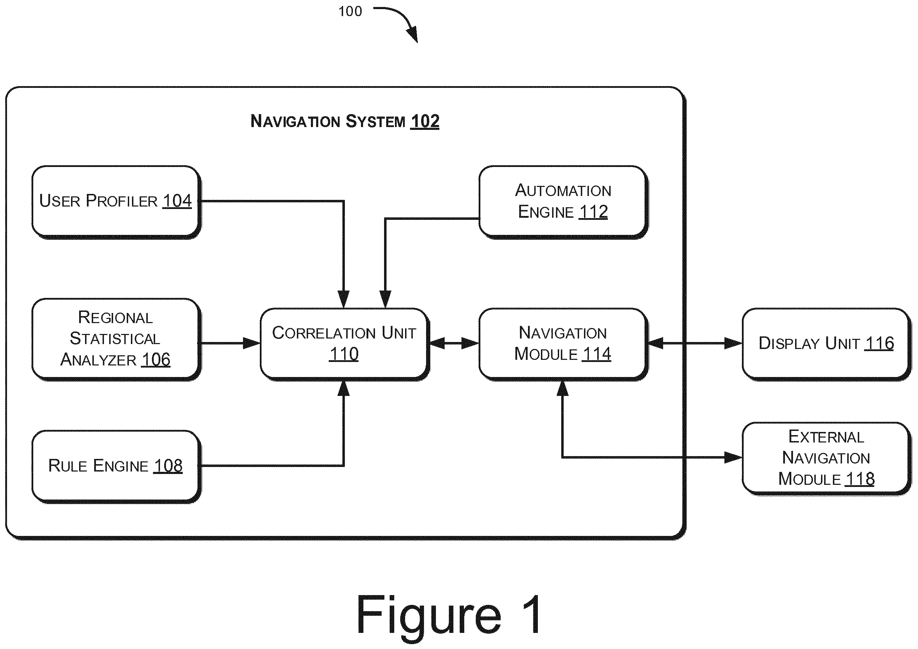

Working of the systems and methods for recommending an optimal route to a user is described in conjunction with Figures 1-3. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof. While aspects of the systems and methods can be implemented in any number of different computing systems environments, and/or configurations, the embodiments are described in the context of the following exemplary system architecture(s).

Figure 1 illustrates an exemplary network environment 100 comprising a navigation system 102, in accordance with some embodiments of the present disclosure.

In an example, the navigation system 102 may be implemented on variety of computing systems. Examples of the computing systems may include a laptop computer, a smart phone, a tablet, a notebook, a smart device, a wearable device, and the like. Although the description herein is with reference to certain computing systems, the systems and methods may be implemented in other computing systems, albeit with a few variations, as will be understood by a person skilled in the art.

As shown in Figure 1, the navigation system 102 comprises various computational units, such as a user profiler 104, a regional statistical analyzer 106, a rule engine 108, a correlation unit 110, an automation engine 112, and a navigation module 114.

Further, the navigation system 102 is communicatively coupled to a display unit 116 and an external navigation module 118. The display unit 116 is used to display an optimal route to the user along with additional information, such as travel time, weather condition, and travel cost. Examples of the external navigation module 118 may include navigation devices, such as Mobile Maps^{™}, TomTom^{™}, and Garmin^{™}. The external navigation module 118 may provide base navigation data to the navigation module 114 present in the system 102 to build potential routes. The external navigation module 118 may also display routes with way points as provided by navigation module 114.

Although all the display unit 116 is shown external to the navigation system 102 in Figure 1, it may be noted that, in one implementation, that the display unit 116 may be present within the navigation system 102. Hereinafter, the navigation system 102 may be interchangeably referred to as system 102.

In an example, the system 102 may communicate with the external navigation module 118 through a network. The network may be a wireless network, wired network or a combination thereof. The network can be implemented as one of the different types of networks, such as intranet, local area network (LAN), wide area network (WAN), the internet, and such. Further, the network may include a variety of network devices, including routers, bridges, servers, computing devices, storage devices, etc.

In operations, to recommend an optimal route to a user, the user profiler 104 may receive a potential travel request from the user. Generally speaking, the potential travel request is an instruction for the navigation system to determine a route. In an example, the potential travel request may comprise a start location, an end location, and a time of departure from the start location. In another example, to determine the potential travel request, the user profiler 104 may analyze a user profile indicating user preferences, past travel requests, social media profiles, a to-do list, calendar invites, and a mode of travel. The user profiler 104 is responsible for retrieving user related from various sources and identifying aspects which may be used for determining the optimal route, such as calendar invites, social media profiles, user preferences, user settings and user profile information. It may be noted that receiving of the potential travel request is not limited to the user. In an example, the potential travel request may be identified based on information received from sources, such as smart home automation system. Further, the potential travel request may be then received by the user profiler 104.

In an example, the user profiler 104 may receive the potential travel request when the user is entering the vehicle or when the user is entering an address into the system 102. In another example, the user profiler 104 may determine the potential travel request based on personal routine of user, such as going to office, returning home, and going to gym. Also, the user profiler 104 may consider personal Itinerary notifications for upcoming travels by accessing calendar or to-do list of the user.

In one embodiment, the user profiler 104 may receive the potential travel request when a meeting request notification is identified that has a meeting location different from current geographic location. In another embodiment, the user profiler 104 may receive the potential travel request when a smart home gateway provides data from a Smart Refrigerator on Low supplies. In such cases, the potential travel request may include way point to a preferred or to a closest grocery store, as the case maybe.

Once the potential travel request is received, the regional statistics analyzer may generate regional context data by analyzing the potential travel request. The term "regional context data" generally refers to a property of a particular location (or a particular region, road etc.) that the navigation system can use to decide whether a route should include that location (or region, road etc.). In an example, to generate the regional context data, the regional statistical analyzer 106 may extract at least one region to be covered during the travel based on the potential travel request. Thereafter, the regional statistical analyzer 106 may determine traffic conditions, number of tolls, modes of transport, the High Occupancy Vehicle (HOV) lane data, public transport details, and fuel price in the at least one region in order to generate the regional context data. The HOV lane data may include timings indicating when HOV lanes are available and minimum passenger requirement in order to use the HOV lanes.

The regional statistics analyzer is responsible for interfacing with the various external systems providing region specific data like traffic information, neighborhood information, infrastructure specific information like bad roads, construction updates, fuel price, toll charge, public transport information and delays, available HOV lanes, available call taxi options etc. This data is then used to generate the regional context data and provided to the correlation unit 110 for specific areas being requested in potential routes.

Further, the regional context data may generate cost context data based on the regional context data. The cost context data may comprise one or more potential routes from the start location to the end location as indicated in the potential travel request. Each of the at least one potential route is associated with a travel time and a travel cost value. In an example, the cost context data is determined by the regional statistical analyzer 106 by analyzing number of halts, average speed, fuel price, and driving pattern of the user.

In an example, the rule engine 108 may maintain one or more rules that may be used by the correlation unit 110 in building travel context data and arriving at related actions. The one or more rules may be stored in a backend system (cloud or hosted) and can be downloaded by the rule engine 108 whenever the potential travel request is received. The one or more rules may indicate a sequence of steps that should be performed under a predefined scenario. For example, one of the rules may specify that the user may not be able to user the public transport after 11 pm.

Further, the correlation unit 110 may correlate the potential travel request, the regional context data and the cost context data to obtain the travel context data. The correlation unit 110 is responsible for executing the workflow defined and correlating the information gathered by the user profiler 104 and the regional statistical analyzer 106.

Once the correlation is done, the navigation module 114 may determine an optimal route amongst the at least one potential route by applying the one or more rules to the user profile and the travel context data. In an example, the navigation module 114 may recommend the optimal route to the user as a recommended route on the display unit 116.

Further, in an example, the navigation module 114 may instruct the user to choose the mode of transport, such as car, public transport, and taxi or other means of transport. In case, the user selects the car as the mode of transport, the navigation module 114 may consider HOV lanes while recommending the optimal route.

Upon determining the optimal route, the navigation module 114 may dynamically updating the optimal route based on profiles of passengers travelling in the vehicle and High Occupancy Vehicle (HOV) lane data. In an example, to dynamically update the optimal route, the navigation module 114 may determine presence of the one or more passengers in the vehicle by interacting with the automation engine 112. The automation engine 112 may use additional sensors like occupancy counter, finger print reader, ECG reader, voice recognition, face recognition to identify presence/number of the passengers and provide the same information to the navigation module 114. Thereafter, the navigation module 114 may extracting a passenger profile for each of the passengers from various data sources. The data source could be devices used by the passengers and social media profiles of the passengers. In an example, the passenger profile may comprise preferences, social media profile, and a travel itinerary, age and health condition of the passenger. Thereafter, the navigation module 114 may update the optimal route to be recommended to the user based on the passenger profile. Example of such scenario would be a family traveling in the morning in a single vehicle, covering different destination like Office, School, and Markets etc. The optimal routes need to be calculated based on historical data, time restrictions and preferences of the passengers.

Further, the navigation module 114 may consider the HOV lane data to dynamically update the optimal route. In an example, the navigation module 114 may extract HOV lane usage restrictions (like time) and number of occupants at a given point in time from the HOV lane data to update the optimal route.

Furthermore, the navigation module 114 is adapted to continuously validate various input factors for updating the context and optimal navigation route. While the trip is in progress, various factors keep changing, such as like traffic conditions, number of passengers, and new notifications/information from different sources. The navigation module 114 may use such information to update the optimal route. Then, the navigation module 114 may display the optimal route to the user on the display unit 116 along with additional information, such as cost associated with the travel, travel time, traffic condition, and weather condition.

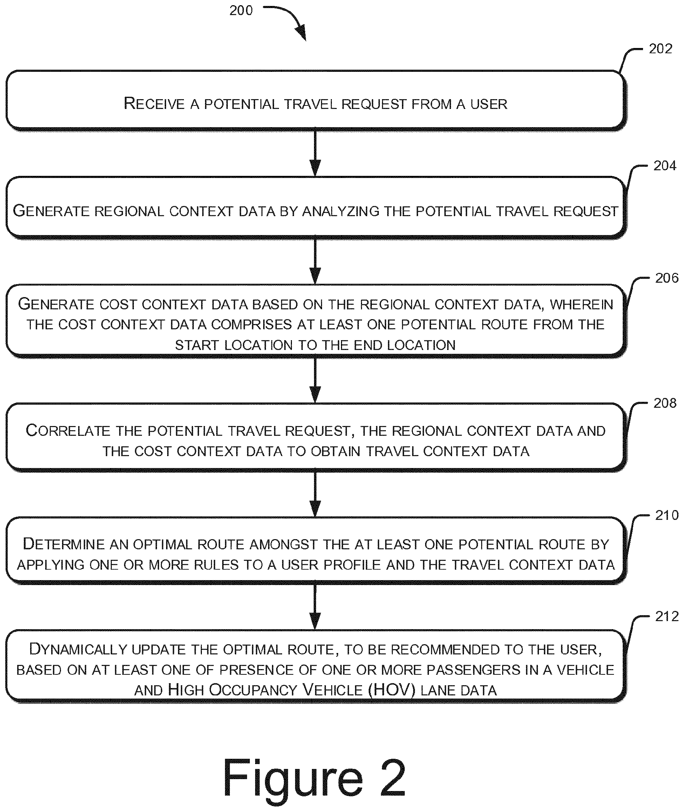

Figure 2 illustrates an exemplary method for recommending an optimal route to a user, in accordance with some embodiments of the present disclosure.

The method 200 may be described in the general context of computer executable instructions. Generally, computer executable instructions can include routines, programs, objects, components, data structures, procedures, modules, and functions, which perform particular functions or implement particular abstract data types. The method 200 may also be practiced in a distributed computing environment where functions are performed by remote processing devices that are linked through a communication network. In a distributed computing environment, computer executable instructions may be located in both local and remote computer storage media, including memory storage devices.

The order in which the method 200 is described is not intended to be construed as a limitation, and any number of the described method blocks can be combined in any order to implement the method 200 or alternative methods. Additionally, individual blocks may be deleted from the method 200 without departing from the scope of the subject matter described herein. Furthermore, the method 200 can be implemented in any suitable hardware, software, firmware, or combination thereof.

With reference to Figure 2, at block 202, a potential travel request is received from a user. The potential travel request may include a start location, an end location, and a time of departure from the start location. In an example, the user profiler 104 may determine the potential travel request based on user profile. The user profiler 104 may build the user profile by accessing user preferences, past travel requests, social media profiles, a to-do list, calendar invites, and a mode of travel. Once the user profile is determined, the user profiler 104 may analyze the user profile to determine the potential travel request.

At block 204, regional context data is generated by analyzing the potential travel request. In an example, the regional statistical analyzer 106 may extract at least one region to be covered during the travel based on the potential travel request. Thereafter, the regional statistical analyzer 106 may determine traffic conditions, number of tolls, modes of transport, the High Occupancy Vehicle (HOV) lane data, public transport details, and fuel price in the at least one region to generate the regional context data.

At block 206, cost context data is generated based on the regional context data. The cost context data may comprise potential routes from the start location to the end location. Further, the potential routes are associated with a travel time and a travel cost value. In an example, the regional statistical analyzer 106 may determine the cost context data based on number of halts, average speed, fuel price, and driving pattern of the user.

At block 208, the potential travel request, the regional context data and the cost context data are correlated to obtain travel context data. In an example, the correlation unit 110 may correlate the potential travel request, the regional context data and the cost context data are correlated to obtain the travel context data.

At block 210, an optimal route is determined amongst the at least one potential route by applying one or more rules to the user profile and the travel context data. In an example, the navigation module 114 may select one of the potential routes as the optimal route based on the one or more rules and the travel context data.

At block 212, the optimal route, to be recommended to the user, is dynamically updated based on at least one of presence of one or more passengers in a vehicle and High Occupancy Vehicle (HOV) lane data. In an example, the navigation module 114 may dynamically update the optimal route based on passenger profiles and the HOV lane data. To update the optimal route based on the passenger profiles, the navigation module 114 may first determine presence of the one or more passengers in the vehicle. Thereafter, the navigation module 114 may extract the passenger profile for each of the one or more passengers from one or more data sources. In an example, the passenger profile may comprise preferences, social media profile, and a travel itinerary. Once the passenger profiles are determined, the navigation module 114 may update the optimal route to be recommended to the user based on the passenger profiles.

Further, to dynamically update the optimal route based on the HOV lane data, the navigation module 114 may determine a count of the one or more passengers in the vehicle using various sensors. Thereafter, the navigation module 114 may update the optimal route based on the count and the HOV lane data.

Thus, the system 102 and the method of the present subject matter leverages various factors, such as user profile, regional context, and HOV lane enforcement while recommending the optimal route to the user. Further, the present subject matter keeps validating external factors, such as traffic information and new passenger to dynamically update the optimal route before recommending it to the user on the display unit 116.

### Computer System

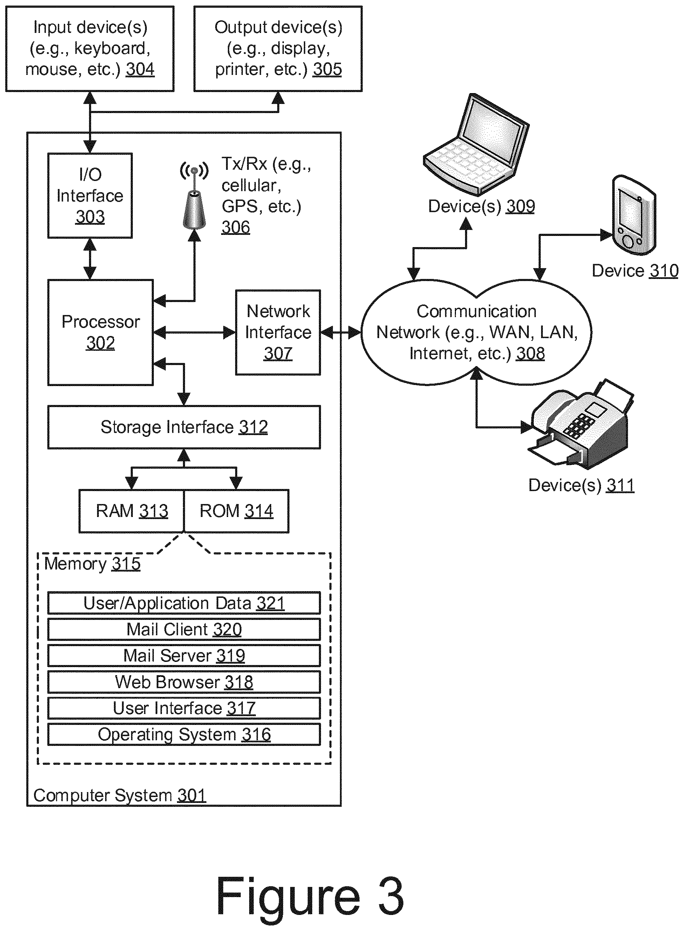

**FIG. 3** is a block diagram of an exemplary computer system for implementing embodiments consistent with the present disclosure. Variations of computer system 301 may be used for implementing various components of the system 102 presented in this disclosure. Computer system 301 may comprise a central processing unit ("CPU" or "processor") 302. Processor 302 may comprise at least one data processor for executing program components for executing user- or system-generated requests. A user may be a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 302 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 302 may be disposed in communication with one or more input/output (I/O) devices via I/O interface 303. The I/O interface 303 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 303, the computer system 301 may communicate with one or more I/O devices. For example, the input device 304 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 305 may be a printer, fax machine, video display (e.g., cathode ray tube (CRT), liquid crystal display (LCD), light-emitting diode (LED), plasma, or the like), audio speaker, etc. In some embodiments, a transceiver 306 may be disposed in connection with the processor 302. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 302 may be disposed in communication with a communication network 308 via a network interface 307. The network interface 307 may communicate with the communication network 308. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 308 may include, without limitation, a direct interconnection, local area network (LAN), wide area network (WAN), wireless network (e.g., using Wireless Application Protocol), the Internet, etc. Using the network interface 307 and the communication network 308, the computer system 301 may communicate with devices 310, 311, and 312. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 301 may itself embody one or more of these devices.

In some embodiments, the processor 302 may be disposed in communication with one or more memory devices (e.g., RAM 313, ROM 314, etc.) via a storage interface 312. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 316, user interface application 317, web browser 318, mail server 319, mail client 320, user/application data 321 (e.g., any data variables or data records discussed in this disclosure), etc. The operating system 316 may facilitate resource management and operation of the computer system 301. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 317 may facilitate display, execution, interaction, manipulation, or operation of program components through textual or graphical facilities. For example, user interfaces may provide computer interaction interface elements on a display system operatively connected to the computer system 301, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 301 may implement a web browser 318 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 301 may implement a mail server 319 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 301 may implement a mail client 320 stored program component. The mail client may be a mail viewing application, such as Apple Mail, Microsoft Entourage, Microsoft Outlook, Mozilla Thunderbird, etc.

In some embodiments, computer system 301 may store user/application data 321, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described systems and methods for recommending an optimal route to a user. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of recommending an optimal route to a user, the method comprising:
receiving, by a navigation system, a potential travel request from the user, wherein the potential travel request comprises a start location, an end location, and a time of departure from the start location;
generating, by the navigation system, regional context data by analyzing the potential travel request;
generating, by the navigation system, cost context data based on the regional context data, wherein the cost context data comprises at least one potential route from the start location to the end location, and wherein each of the at least one potential route is associated with a travel time and a travel cost value;
correlating, by the navigation system, the potential travel request, the regional context data and the cost context data to obtain travel context data;
determining, by the navigation system, the optimal route amongst the at least one potential route by applying one or more rules to a user profile and the travel context data; and
dynamically updating, by the navigation system, the optimal route, to be recommended to the user, based on at least one of presence of one or more passengers in a vehicle and High Occupancy Vehicle (HOV) lane data.

2. The method of claim 1, wherein receiving the potential travel request further comprises:
receiving the user profile by the navigation system, wherein the user profile indicates one or more of a user preference, a past travel request, a social media profile, a to-do list, a calendar invite, and a mode of travel; and
determining, by the navigation system, the potential travel request by analyzing the user profile.

3. The method of claim 1 or claim 2, wherein generating regional context data further comprises:
extracting, by the navigation system, at least one region to be covered during the travel based on the potential travel request; and
determining, by the navigation system, traffic conditions, number of tolls, modes of transport, the High Occupancy Vehicle lane data, public transport details, and fuel price in the at least one region to generate the regional context data.

4. The method of any of the preceding claims, wherein the cost context data is determined by analyzing number of halts, average speed, fuel price, and driving pattern of the user.

5. The method of any of the preceding claims, wherein dynamically updating the optimal route further comprises:
determining, by the navigation system, presence of the one or more passengers in the vehicle;
extracting, by the navigation system, a passenger profile for each of the one or more passengers from at least one data source, wherein the passenger profile comprises one or more of a preference, a social media profile, and a travel itinerary; and
updating, by the navigation system, the optimal route to be recommended to the user based on the passenger profile.

6. The method of any of the preceding claims, wherein dynamically updating the optimal route further comprises:
determining, by the navigation system, a count of the one or more passengers in the vehicle using at least one sensor; and
updating, by the navigation system, the optimal route to be recommended to the user based on the count and the HOV lane data.

7. A navigation system for recommending an optimal route to a user, the system comprising:
at least one processor; and
a computer-readable medium storing instructions that, when executed by the at least one processor, cause the at least one processor to perform operations comprising:
receiving a potential travel request from the user, wherein the potential travel request comprises a start location, an end location, and a time of departure from the start location;
generating regional context data by analyzing the potential travel request;
generating cost context data based on the regional context data, wherein the cost context data comprises at least one potential route from the start location to the end location, and wherein each of the at least one potential route is associated with a travel time and a travel cost value;
correlating the potential travel request, the regional context data and the cost context data to obtain travel context data;
determining the optimal route amongst the at least one potential route by applying one or more rules to a user profile and the travel context data; and
dynamically updating the optimal route, to be recommended to the user, based on at least one of presence of one or more passengers in a vehicle and High Occupancy Vehicle (HOV) lane data.

8. The system of claim 7, wherein receiving the potential travel request further comprises:
receiving the user profile, wherein the user profile indicates one or more of a user preference, a past travel request, a social media profile, a to-do list, a calendar invites, and a mode of travel; and
determining the potential travel request by analyzing the user profile.

9. The system of claim 7 or claim 8, wherein generating regional context data further comprises:
extracting at least one region to be covered during the travel based on the potential travel request; and
determining traffic conditions, number of tolls, modes of transport, the High Occupancy Vehicle lane data, public transport details, and fuel price in the at least one region to generate the regional context data.

10. The system of any of claims 7 to 9, wherein the cost context data is determined by analyzing number of halts, average speed, fuel price, and driving pattern of the user.

11. The system of any of claims 7 to 10, wherein dynamically updating the optimal route further comprises:
determining presence of the one or more passengers in the vehicle;
extracting a passenger profile for each of the one or more passengers from at least one data source, wherein the passenger profile comprise one or more of a preference, a social media profile, and a travel itinerary; and
updating, the optimal route to be recommended to the user based on the passenger profile.

12. The system of any of claims 7 to 11, wherein dynamically updating the optimal route further comprises:
determining a count of the one or more passengers in the vehicle using at least one sensor; and
updating the optimal route to be recommended to the user based on the count and the HOV lane data.

13. A non-transitory computer-readable medium storing computer-executable instructions for performing the method of any of claims 1 to 6.
